# EUROPEAN PATENT SPECIFICATION

(11) **EP 3 363 116 B1**
(45) Date of publication and mention of the grant of the patent: **25.12.2019**
(21) Application number: 16801838.0
(22) Date of filing: 14.10.2016
(51) Int. Cl.: H02S 50/00, H02S 20/22

(54) **APPLYING METHOD FOR PHOTOVOLTAIC MODULES INTEGRATED IN A BUILDING**
VERFAHREN ZUM ANBRINGEN VON IN EINEM GEBÄUDE INTEGRIERTEN FOTOVOLTAIKMODULEN
PROCÉDÉ D'APPLICATION POUR DES MODULES PHOTOVOLTAÏQUES INTÉGRÉS DANS UN BÂTIMENT

(30) Priority: 15.10.2015 IT UB20154707
(43) Date of publication of application: 22.08.2018
(73) Proprietor: Politecnico di Milano, 20133 Milano (IT)
(72) Inventor: JAKICA, Nebojsa, I-20125 Milano (IT); ZANELLI, Alessandra, 47015 Modigliana (FC) (IT)
(74) Representative: Borsano, Corrado
(86) International application number: PCT/IB2016/056167
(87) International publication number: WO 2017/064662

(56) References cited:
- EP-A1- 2 619 377
- US-A1- 2010 116 316
- US-A1- 2010 300 518
- US-A1- 2013 112 245

## Description

### [FIELD OF THE INVENTION]

The present invention relates to a method of application of photovoltaic modules integrated into a building.

In general, the present invention finds application in the field of photovoltaic panels integrated into buildings, i.e. the BIPV (Building Integrated Photo Voltaic) field.

### [PRIOR ART]

It is known to use photovoltaic modules having a flat glass base whereon a crystalline-silicon or thin-film photovoltaic element is applied, typically encapsulated into a sheet.

Such photovoltaic modules, however, although susceptible of vertical positioning on walls of buildings as BIPV, offer poor energy efficiency because of the optical reflections of the light, which cannot hit the surface of the photovoltaic element perpendicularly.

Document CN10403 7254 proposes to position a plurality of flat photovoltaic modules onto a curved frame. Similarly, document FR2953645 proposes to apply flat photovoltaic modules onto a curved frame having a long radius of curvature.

Thin-film technologies allow creating flexible photovoltaic modules, which can be curved with a certain radius of curvature. However, when applied to walls of buildings, such curved photovoltaic modules merely lead to aesthetic differences without improving the performance of the system, while however increasing its cost.

Document CN103337537A proposes some improvements in the process for manufacturing BIPV photovoltaic modules with a curved surface. ***The document*** US2013/112245A ***is a related prior art.*** It is also known to form modular glass elements, even with complex shapes, by means of (vacuum) moulding processes. Such modular glass elements are especially used for covering façades of buildings, in order to improve the appearance and illumination thereof. Photovoltaic technologies have recently begun to be implemented in combination with such glass blocks. Document PCT/IT2013/000069 relates to solar cells integrated into flat rectangular glass blocks used for making covering tiles for buildings. According to such a solution, the photovoltaic element can be combined with a glassy substrate in order to create partially transparent photovoltaic modules. Since such glass blocks are not originally designed for use as optically active elements in a photovoltaic module, there, is still big room for improvement.

Document JP2014150142 proposes a photovoltaic module integrated into a decorative structure.

Document KR20120002825 proposes a BIPV system for application to a building, which incorporates an angle sensor and a motor for angle variation.

Document US20120234371 A1 relates to a solar concentrator that can be adapted to the angle of incidence of the sunlight.

The above-mentioned patents propose lamination of the optically active glass parts in order to prevent optical dispersion and increase the efficiency of the photovoltaic element. Such solutions do not consider the transparency of the photovoltaic module as a useful property, and the BIPV modules are not curved.

### [OBJECTS AND SUMMARY OF THE INVENTION]

The present invention aims at providing a method of application of photovoltaic modules integrated into a building, which are alternative to the prior art.

It is an object of the present invention to provide a method of application of photovoltaic modules integrated into a building, which allows optimizing the photovoltaic and energetic performance while still preserving the beauty of the façade. The method is as recited in claim 1 with further advantageous embodiments recited in the dependent claims.

The method provides for defining a plurality of façade parameters for the vertical wall of the building: cardinal orientation of the vertical wall, application height available on the vertical wall.

A plurality of application parameters are defined, which depend on typological characteristics of the photovoltaic modules applicable along a vertical and/or horizontal coordinate associated with the vertical wall.

A priority function is defined, which is associated with the application parameters and which is variable along the vertical and/or horizontal coordinate.

According to the façade parameters, the application parameters and the priority function, it is provided to determine the typological characteristics of each one of the photovoltaic modules along the vertical and/or horizontal coordinate, and to further calculate values for the angle of each one of the photovoltaic modules along the vertical and/or horizontal coordinate.

The photovoltaic modules are then applied to the vertical wall in accordance with the determined typological characteristic and the calculate angle values.

Advantageously, the photovoltaic module with a planar border can be adapted to the standard profiles of continuous façades.

Advantageously, the process for manufacturing a photovoltaic module on an angled support is more sustainable, both economically and environmentally, compared to the process for manufacturing the float glass normally employed as a support for on-façade photovoltaic modules.

Advantageously, the photovoltaic element of the module can be obtained by superimposition of different layers, whether of the shading, luminous-filter or coloured type, or of various photovoltaic cells, and may even be completely opaque or completely transparent, in accordance with the design requirements.

Advantageously, the photovoltaic element is always planar, but can be mounted at different angles, so that the photovoltaic module as a whole will take a three-dimensional conformation with a curvilinear cross-section.

Advantageously, the photovoltaic element may have a standard size for each typological set of support elements; this allows mass production and also mass customization.

Advantageously, the photovoltaic element can be produced separately from the support element as a thin sub-component, which can be adapted to the design requirements and to the particular photovoltaic technology employed; it may then be laminated on a rigid support element, preferably made of moulded glass, at the end of the latter's production process.

Advantageously, the typological set of the module is tuned via parametric engineering, and is always optimized for a preset solar altitude.

Advantageously, the photovoltaic module that integrates the photovoltaic element, angled relative to the vertical, has such optical properties that allow it to operate as an optical semi-concentrator of the photovoltaic cell integrated therein, thus increasing the energy produced by the photovoltaic cell.

Advantageously, the photovoltaic module that integrates the photovoltaic element, angled relative to the vertical, has such optical properties that allow it to operate as a daylighting redirecting system (DRS), so as to increase the natural illumination inside a building, while at the same time reducing the demand for artificial light, resulting in a lower total energy consumption of the building.

Advantageously, the photovoltaic module that integrates the photovoltaic element, angled relative to the vertical, has such optical properties that allow it to operate as a fixed shading filtering system and as an anti-glare and anti-contrast protection system, thus improving the luminous comfort within the inside space of the building.

Other objects and advantages of the present invention will become more apparent in the light of the following detailed description and of the dependent claims, which define some preferred and advantageous embodiments of the present invention.

The present invention further relates to a computer program, preferably a CAD program, configured for handling the complexity of the design and application parameters in relation to functional priorities, for the purpose of optimizing the distribution of the photovoltaic modules over the architectonic surface. The program is as recited in claim 12.

### [BRIEF DESCRIPTION OF THE DRAWINGS]

Some preferred and advantageous embodiments of the present invention will now be described by way of non-limiting example with reference to the annexed drawings, wherein:
- Figure 1 shows one embodiment of a photovoltaic module according to the present invention.
- Figure 2 is a sectional view of the photovoltaic module of Figure 1.
- Figure 3 shows further different embodiments of photovoltaic modules.
- Figure 4 exemplifies some properties of a photovoltaic module.
- Figure 5 illustrates some application parameters for photovoltaic modules integrated into a vertical wall of a building.
- Figure 6 shows the final result of the application of photovoltaic modules integrated into a vertical wall of a building.
- Figure 7 shows a further example of photovoltaic modules according to the present invention.
- Figure 8 shows yet another example of photovoltaic modules.

In the various drawings, the same reference numerals are used to designate similar components, materials or functions.

### [DETAILED DESCRIPTION OF THE INVENTION]

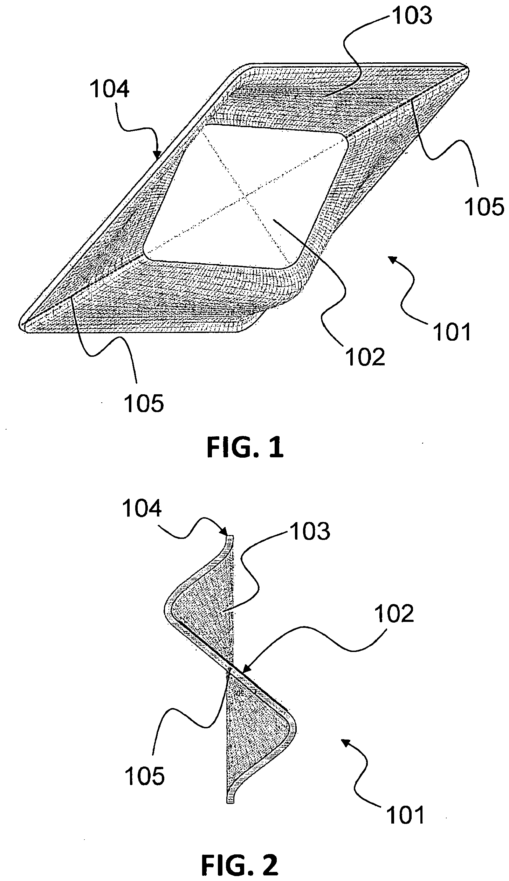

Figure 1 shows one example of a photovoltaic module 101 according to the present invention.

The photovoltaic module 101 comprises a planar photovoltaic element 102, which incorporates a photovoltaic cell for converting solar energy into electric energy.

The photovoltaic module 101 further comprises a rigid support element 103, appropriately curved and shaped, configured for housing the planar photovoltaic element 102.

The rigid support element 103 comprises an external border 104 having a planar perimeter, i.e. extending in a single through plane. Said external border 104 allows the application of the whole photovoltaic module 101 onto a frame associable with a vertical wall of a building, in particular by laying next to each other a plurality of photovoltaic modules constrained via the rigid support element, as will be described more in detail below.

The rigid support element 103 comprises a central support surface having a housing for the photovoltaic element with a fixed orientation, defined by the shape of the rigid support element 103.

The photovoltaic module 101 comprises one or more electric wirings 105 for distributing into an electric grid the energy generated by the solar radiation incident on the photovoltaic element 102.

Preferably, the rigid support element 103 is made of glassy material, in particular by moulding, preferably by vacuum moulding. The vacuum moulding method is advantageously both economical and accurate for making curved rigid supports of glassy material. In fact, unlike the "float" method for the production of glassy supports, the vacuum moulding method does not require a subsequent heating of the material to give it a curved shape.

In this way it is possible to make rigid support elements which are at least partially transparent and which have the desired geometric and aesthetic characteristics for application to the building wall.

The typological characteristics of the photovoltaic module 101 essentially depend on the characteristics of the elements included therein, in particular on the characteristics of the rigid support element 103 and of the photovoltaic element 102.

Preferably, one typological characteristic of the photovoltaic module 101 is determined by the material of the rigid support 103, e.g. glass, plastic, metal, etc.

Preferably, another typological characteristic of the photovoltaic module 101 is determined by the surface finish of the rigid support 103, e.g. smooth glass, satin glass, brushed glass, etc.

In particular, depending on the material and surface finish of the rigid support 103, the latter may be: transparent (up to a given percentage, which may preferably be as high as 95%), or clear, or translucent, or opaque.

Preferably, a further typological characteristic of the photovoltaic module 101 is determined by the type of photovoltaic cell included in the photovoltaic module 102, in particular by the coating thereof; for example, the photovoltaic cell may of the monocrystalline, polycrystalline, perovskite, DSSC, heterojunction, HIT, bifacial types, etc. It should be noted that different types of photovoltaic elements can be used on different modules applied to the same wall, so as to rely on higher variability of the typological characteristics of the modules.

Preferably, the photovoltaic module 101 has dimensions of approx. 200 x 400 mm. The photovoltaic module may however have different dimensions; in particular, its size may be bigger when allowed by the limitations imposed by the moulds used for the rigid support. Figure 2 shows a cross-section of the photovoltaic module 101, in which one can appreciate the central support surface that houses the photovoltaic element 102, which lies at an angle relative to the plane of the border 104, and hence at an angle relative to the vertical wall to which the modules can be applied.

The orientation of the photovoltaic element 102 relative to the border 104 (i.e. relative to the vertical of the wall to which the modules are applied) is fixed and determined by the geometry of the rigid support element 103.

The photovoltaic element 102 is thus configured for forming an angle between its own surface and the border 104, i.e. the direction of the vertical wall to which the photovoltaic module will be applied for integration into the building.

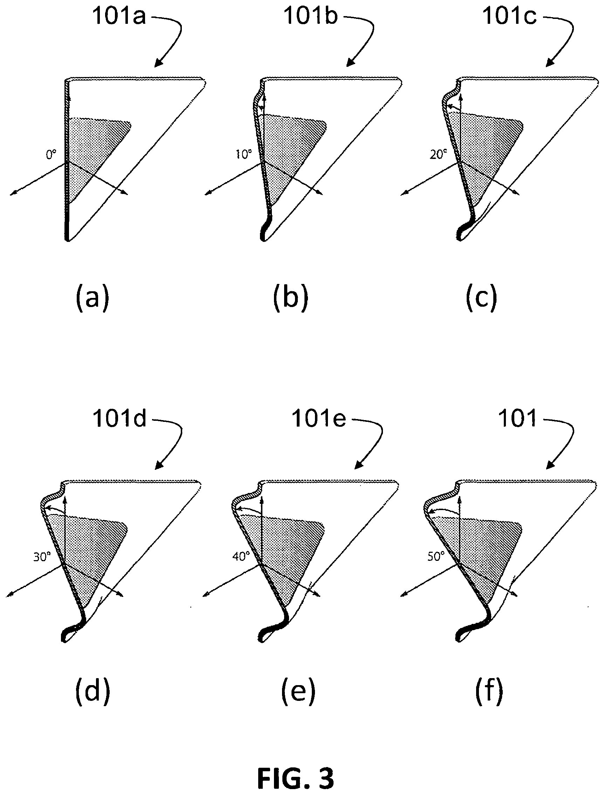

Figure 3 illustrates some different embodiments of photovoltaic modules 101a, 101b, 101c, 101d, 101e and 101 according to the present invention. Such photovoltaic modules comprise different rigid support elements having an established geometry, so as to be characterized by different angles between the surface of the photovoltaic element and the surface of the vertical wall to which the modules are applied, i.e. the surface defined by the border 104.

In other words, the photovoltaic modules 101a, 101b, 101c, 101d, 101e and 101 define a "typological set".

In particular, the values of such angles for each one of said photovoltaic modules are, respectively: 0°, 10°, 20°, 30°, 40° and 50°. In general, these angles can assume a plurality of values, preferably discrete ones, ranging from 0° to 90°.

Advantageously, in order to simplify the making of the photovoltaic modules, the geometry of the planar photovoltaic element 102 may be the same for all the support elements of the different modules shown in Figure 3.

In general, the central area of the photovoltaic element preferably remains always planar, whatever the angle taken by the central support surface.

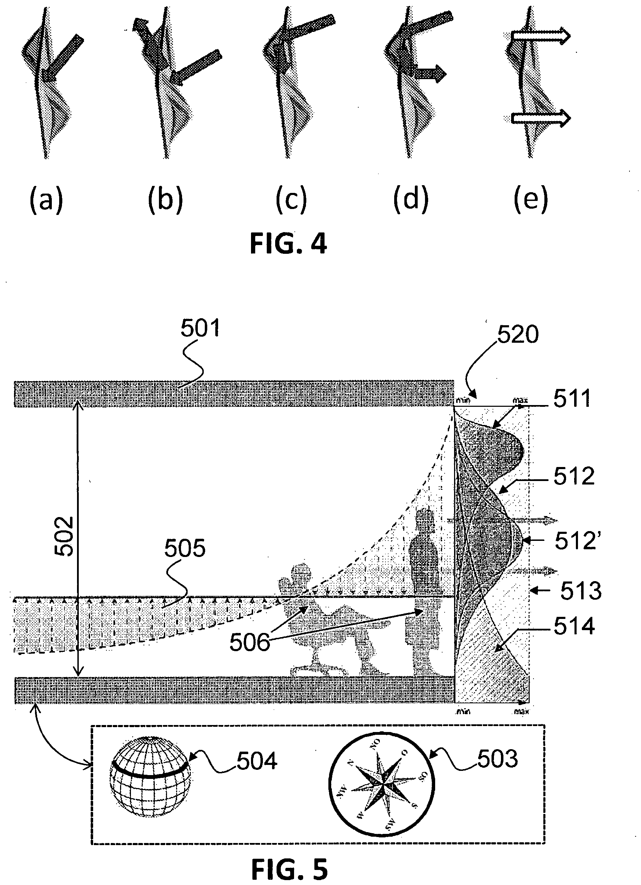

Figure 4 exemplifies some of the properties of the photovoltaic module 101, obtained through the particular angled conformation of the rigid support element 103 in association with the photovoltaic element 102.

The solid arrow represents the path of the light incident on the photovoltaic module. The outlined arrow represents the ideal path followed by the eyes of a user behind the photovoltaic module, i.e. inside the building.

As shown in view (a), the photovoltaic module allows optimizing the angle of incidence of the solar radiation onto the photovoltaic element by making it as perpendicular as possible, in a statistical manner, in order to maximize the generation of electric energy.

As shown in view (b), the photovoltaic module allows directing the incident solar light, through the transparent or clear or translucent support element, towards the inside of the building, for improved ambient illumination.

As shown in view (c), the particular geometry of the rigid support element, which comprises a pair of respective curved and reflecting surfaces, is adapted to direct the solar beams incident thereon towards the surface of the planar photovoltaic element, thus concentrating the intensity thereof. In this way, it is possible to further improve the energetic efficiency of the system; in fact, the rotation of the photovoltaic element benefits from Snell's law and from the Fresnel effect for redirecting the light.

As shown in view (d), the particular geometry of the rigid support element allows indirect reflection of the solar beams, especially when a translucent rigid support element is used, which contributes to reducing or controlling the glaring effects on the users inside the building, particularly when the sun is low, e.g. at dawn or sunset.

Finally, as shown in view (e), the particular transparent finish of the rigid support element allows outward vision from the inside, so that the users inside the building can benefit from a more or less defined outside view.

Figure 5 exemplifies the method of application of photovoltaic modules integrated into a building, illustrating some application parameters of the photovoltaic modules to be integrated into the vertical wall of a building 501.

The method of application according to the present invention provides for defining a plurality of façade parameters for the vertical wall of the building 501.

Such façade parameters comprise the application height 502 available on the vertical wall whereto the photovoltaic modules are to be applied; said application height essentially corresponds to the distance between two floors of the building 501.

The façade parameters further comprise the cardinal orientation (exemplified as reference 503), i.e. the exposition to North, South, West, East or intermediate directions of the façade with the vertical wall whereto the photovoltaic modules are to be applied.

Preferably, the façade parameters further comprise the geographic latitude (exemplified as reference 504) of the vertical wall whereto the photovoltaic modules are to be applied; if the geographic latitude (i.e. the position on the earth parallels: pole, equator, intermediate parallels) is known, one indirectly knows the mean elevation of the sun in the course of the year.

The method of application according to the invention also provides for defining a plurality of application parameters relating to the distribution of said photovoltaic modules over said wall in its entirety, which depend on the typological characteristics of the photovoltaic modules applicable to the façade.

Preferably, the typological characteristics comprise, as already described: material and finish of the rigid support, and type of photovoltaic element.

Preferably, the application parameters comprise an illumination parameter 511, which depends on the light intensity transmissible through the rigid support element, and possibly also through the photovoltaic element, if the latter is transparent. Said illumination parameter 511 expresses, within the environment of the building 501, a distribution 505 of the natural illumination in the available space. In a preferred embodiment, the illumination parameter 511 depends also on any shadiness adjacent to the wall of interest, such as, for example, shadiness due to trees or adjacent buildings that modify the light intensity available for ambient illumination within the building.

Preferably, the application parameters comprise a visibility parameter 512 and a glare control parameter 512', which depend on the transparency of the rigid support element, and possibly also on the transparency of the photovoltaic element. Said visibility parameter 512 and glare control parameter 512' express, for the user 506 inside the building, the possibility of seeing outside, as already described.

Preferably, the application parameters comprise a photovoltaic area parameter 513 that depends on the usable area of the photovoltaic element of each module to be installed. Said photovoltaic area parameter 513 can affect the overall efficiency of the solar energy conversion system, in order to maximize the obtainable power.

Preferably, the application parameters comprise an opacity parameter 514 that depends on the opacity of the photovoltaic element, which is variable along the vertical and/or horizontal coordinate. Said opacity parameter allows, preferably for a height range starting from the waist of the user 506 downwards, to give more opacity to the façade in order to improve the privacy inside the building.

According to the method of application of the present invention, the application parameters are variable along the vertical and/or horizontal coordinate associated with the wall. In other words, the application parameters are optimized as a function of the vertical and/or horizontal coordinate to improve the visual, illumination and energetic performance of the system.

The method of application according to the present invention further provides for defining a priority function 520, which is associated with the application parameters and which is variable along the vertical and/or horizontal coordinate.

In the example of Figure 5, the priority function provides:
- a priority preponderance for the illumination parameter 511 in the upper part of the wall, so as to improve the natural ambient illumination within the building;
- a first priority preponderance for the visibility parameter 512 at the average height of the head of the user 506, so as to improve outward vision for the users;
- a second priority preponderance for a glare control parameter at the average height of the head of the user 506, so as to improve outward vision for the users;
- a priority preponderance for the opacity parameter in the lower part of the wall, so as to improve the privacy of the occupants, e.g. when sitting at a desk;
- a priority maximization anywhere for the photovoltaic area parameter, so as to provide the wall, if compatible with the costs of the photovoltaic elements, with as many photovoltaic cells as possible and maximize the production of solar energy.

In general, the priority function can be defined on the basis of the design criteria and the desired result.

The priority function establishes, along the vertical and/or horizontal coordinate associated with the vertical wall, the preponderance of each one of the application parameters taken into account for determining the typological characteristics and for calculating the values of the angle relative to the vertical.

The method of application according to the present invention further provides, for each one of the photovoltaic modules arranged along the vertical and/or horizontal coordinate of the wall, for determining the typological characteristics and calculating the optimal values of the angle relative to the vertical.

Such calculation and determination are preferably carried out by constrained parametric optimization, in particular of the typological characteristics.

Such calculation and determination take into account the façade parameters, the application parameters and the priority function. In particular, the priority function allows the definition of the functional characteristics of the vertical wall, which are also associated with the typological characteristics.

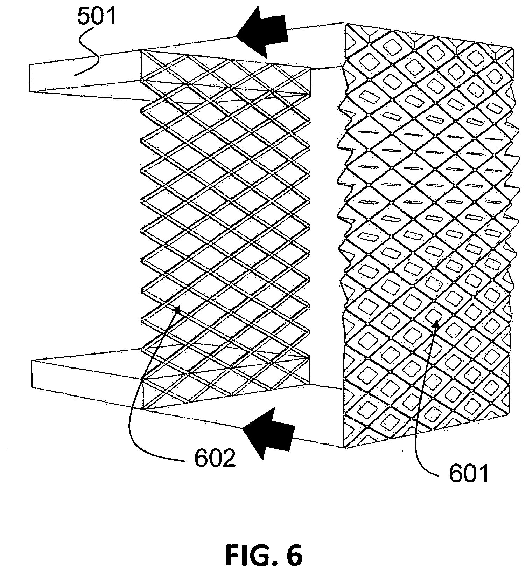

Figure 6 shows an example of a final result of the application of photovoltaic modules integrated into a vertical wall of a building, in accordance with the typological set of the modules' typological characteristics and the optimal angle values determined in the previous steps.

The method of application according to the present invention provides for applying the plurality of photovoltaic modules 601, tiled next to each other and constrained to the frame 602, as indicated by the arrows, for integration into the vertical wall of the building. In this manner, a BIPV system optimized in terms of visibility, illumination and energetic efficiency is created.

The determined typological characteristics and the calculated angle values (preferably selected from discrete angle values available for the rigid support elements) allow varying the properties of the vertical wall made up of the photovoltaic modules along the vertical wall, as represented in Figure 6, which shows different types of photovoltaic modules along the vertical and/or horizontal coordinate.

One variant (not shown) employs, instead of the rigid frame 602, a plurality of cables and joints adapted to hold the plurality of photovoltaic modules 601 next to each other, with the same layout.

Preferably, the rigid support element and the photovoltaic element have sides of the same type, i.e. they comprise the same number of sides. In this regard, the shape of the photovoltaic element is an offset of the shape of the rigid support element.

It should be noted that the photovoltaic modules are preferably polygons with 3, 4, 5 or 6 sides, resulting in specific shapes (sides and angles). The photovoltaic modules can be laid next to each other in a uniform manner (modules having the same shape) or non-uniform manner (differently shaped modules laid next to each other in a mosaic pattern).

Uniform mosaics can also be composed by laying different photovoltaic modules next to each other.

### [INDUSTRIAL APPLICABILITY]

The present solution allows realizing a next-generation architectural component for creating high-performance continuous façades to which the most advanced methods of "multi-criteria" performance engineering can be applied, in that it incorporates qualities that make it efficient for energetic improvement strategies for the so-called nearly-Zero Energy Buildings (nZEBs). This solution allows improving the characteristics of the application of photovoltaic modules, as concerns both passive properties (illumination, visibility) and active properties (such as generation of electric power by means of the integrated photovoltaic system).

The photovoltaic module applicable by using the method of the invention is determined parametrically via a typological system that comprises an angled rigid support, which can assume different angles and incorporate various types of photovoltaic cells into its central core.

The angled rigid support can be made of, for example, glass or printable transparent plastic material, e.g. plexiglas or polycarbonate.

The method of application allows creating a variety of configurations within the same typological set, thanks to the combination of different technologies for the photovoltaic elements and the shading layers, which can be integrated into the modules.

The present invention leaves much freedom of design and much flexibility in terms of optimization of the performance of the building as a whole, in relation to a specific urban, environmental and climatic context.

The present method of application further provides for using a CAD tool that allows optimizing the layout of the façade in relation to the design requirements and to the priority criteria of interest.

The method of application allows optimizing the selection of the photovoltaic technology to be employed in the core, as well as the orientation or angle of the core to be used, for each specific position, when applying the modules onto the whole façade of the building.

The peculiarity of the invention makes it suitable both for new buildings and for upgrading existing buildings (façade substitution or addition of modules on an existing façade).

It is clear that, in the light of the present description, many variants will be apparent to the man skilled in the art.

For example, variations may be conceived as to the shape of the photovoltaic module, as exemplified below.

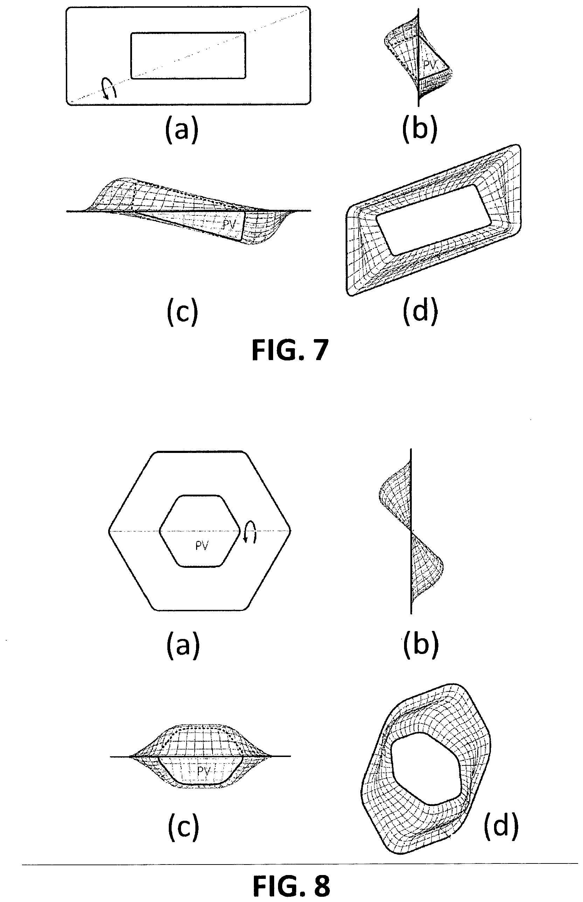

Figure 7 shows a further example of photovoltaic modules according to the present invention.

Sub-figure (a) exemplifies a substantially rectangular example of the photovoltaic module, which comprises a rectangular rigid support element and a respective photovoltaic element housed in the central part of the support. The photovoltaic module is configured for allowing a rotation of the planar photovoltaic element (PV) relative to the plane of the rigid support element in the direction shown by the arrow.

Sub-figure (b) shows a side view of the photovoltaic module, sub-figure (c) shows a top view of the photovoltaic module, and sub-figure (d) shows an isometric view of the photovoltaic module; such views illustrate the photovoltaic module in a definitive configuration, since it has a predefined angle relative to the vertical. Other angle values are also possible, as aforementioned.

Figure 8 shows a further example of photovoltaic modules. Sub-figure (a) exemplifies a substantially hexagonal example of the photovoltaic module, which comprises a hexagonal rigid support element and a respective photovoltaic element housed in the central part of the support, which is also hexagonal. The photovoltaic module is configured for allowing a rotation of the planar photovoltaic element (PV) relative to the plane of the rigid support element in the direction shown by the arrow.

Sub-figure (b) shows a side view of the photovoltaic module, sub-figure (c) shows a top view of the photovoltaic module, and sub-figure (d) shows an isometric view of the photovoltaic module; such views illustrate the photovoltaic module in a definitive configuration, since it has a predefined angle relative to the vertical. Other angle values are also possible, as aforementioned.

In general, considering alternative examples, the axis about which the planar photovoltaic element can rotate relative to the plane of the rigid support element (as indicated by the turning arrow in Figures 7 and 8) may take any direction in the range of 0° to 360° on the plane (vertical in working conditions) of the rigid support element.

Because these alternative embodiments, as exemplified in Figures 7 and 8, are adapted to be tiled next to each other for integration into a wall of a building, they (as well as further embodiments not described herein) are suitable for use in the method of application according to the present invention.

In a further variant, a differently shaped photovoltaic element (e.g. an hexagonal support element with a rectangular photovoltaic element) may be associated with the rigid support element. In fact, photovoltaic elements can have different shapes, so long as they are planar and angled (by different values) relative to the vertical defined by the rigid support element. As far as construction materials are concerned, the teachings of good engineering practice can be adopted in addition to the details of the preferred examples, by using materials and techniques suitable for this purpose.

## Claims

1. Method of application of photovoltaic modules integrated into a building (501), each one (101) of said photovoltaic modules comprising a planar photovoltaic element (102) and a rigid support element (103), wherein a plurality (601) of said photovoltaic modules are tiled next to each other and constrained by means of said rigid support element (103) for integration into a vertical wall (602) of said building (501), and wherein said rigid support element (103) is configured for housing said planar photovoltaic element (102) so as to define an angle between the surface of said planar photovoltaic element (102) and the surface of said vertical wall (602), said method being **characterized in that** it comprises:
- defining a plurality of façade parameters (502, 503, 504) for said vertical wall (602) of said building (501), said façade parameters (502, 503, 504) comprising: cardinal orientation (503) of said vertical wall (602), application height (502) available on said vertical wall (602);
- defining a plurality of parameters (511, 512, 513, 514) of application of the photovoltaic modules over a vertical and/or horizontal coordinate of the vertical wall, and relating to the distribution of said photovoltaic modules over said wall, said application parameters depending on physical characteristics of said photovoltaic modules (101, 601) applicable along said vertical and/or horizontal coordinate associated with said vertical wall (602);
- defining a priority function (520) associated with said application parameters (511, 512, 512', 513, 514) and variable along said vertical and/or horizontal coordinate, said priority function providing:
- a priority preponderance for an illumination parameter (511) in the upper part of the wall;
- a first priority preponderance for a visibility parameter (512) at the average height of the head of a user (506);
- a second priority preponderance for a glare control parameter (512') at the average height of the user's head;
- a priority preponderance for an opacity parameter in the lower part of the wall;
- a priority maximization anywhere for a photovoltaic area parameter;
- according to said façade parameters (502, 503, 504), said parameters of application (511, 512, 512', 513, 514) and said priority function (520), determining said physical characteristics of each one of said photovoltaic modules (101) along said vertical and/or horizontal coordinate, and further calculating values for said angle of each one of said photovoltaic modules (101) along said vertical and/or horizontal coordinate, so as to:
- define an external border (104) of said rigid support element (103) having a planar perimeter, to allow the photovoltaic module (101) to be applied onto a frame associable with other photovoltaic modules (101) on the vertical wall;
- define the geometry of said rigid support element (103) so as the orientation of the photovoltaic element (102) with respect to the external border (104) and the vertical wall (602) has said angle assuming one of a plurality of discrete values ranging from 0° to 90° between the plane of said vertical wall (602) and the plane of said planar photovoltaic element (102);
- applying said photovoltaic modules (601) to said vertical wall (602) according to said determined typological characteristics and said calculated values of said angle.

2. Method of application according to claim 1, wherein said parameters of application comprise: said illumination parameter (511), dependent on the light intensity transmissible through said rigid support element (103); said visibility parameter (512) and said glare control parameter (512'), dependent on the transparency of said rigid support element (103); said photovoltaic area parameter (513), dependent on the usable area of said planar photovoltaic element (102); said opacity parameter (514), dependent on the opacity of said planar photovoltaic element (102).

3. Method of application according to claim 2, wherein said illumination parameter (511) further depends on shadiness adjacent to said vertical wall (602).

4. Method of application according to any one of claims 1 to 3, wherein said plurality of façade parameters (502, 503, 504) further comprises: geographic latitude (504) of said vertical wall (602).

5. Method of application according to any one of claims 1 to 4, wherein said physical characteristics comprise: material of said rigid support element (103); surface finish of said rigid support element (103); type of said planar photovoltaic element (102).

6. Method of application according to claim 5, wherein said material and said surface finish of said rigid support element (103) characterize an element of the type: transparent, or clear, or translucent, or opaque.

7. Method of application according to claim 5 or 6, wherein said rigid support element (103) is made of glass or transparent plastic material.

8. Method of application according to claim 1, wherein said rigid support element (103) comprises a pair of respective curved surfaces, adapted to direct solar beams incident on said rigid support element (103) towards said surface of said planar photovoltaic element (102).

9. Method of application according to claim 1, wherein the geometry of said planar photovoltaic element (102) is the same for any geometry established for said rigid support element (103) in each one of said photovoltaic modules (101, 101a, 101b, 101c, 101d, 101e).

10. Method of application according to any one of claims 1 to 9, wherein said physical characteristics of each one of said photovoltaic modules (101, 101a, 101b, 101c, 101d, 101e) and said values of said angle are calculated by constrained parametric optimization.

11. Method of application according to claim 10, wherein said physical characteristics of each one of said photovoltaic modules (101, 101a, 101b, 101c, 101d, 101e) and said values of said angle of each one of said photovoltaic modules along said vertical and/or horizontal coordinate are variable along said vertical and/or horizontal coordinate.

12. Computer program, preferably a CAD program, which, when run on a computer, is configured for determining typological characteristics and for calculating values of an angle in accordance with the method of application of any one of claims 1 to 11.

## Patentansprüche

1. Verfahren zum Abringen von Photovoltaikmodulen, die in ein Gebäude (501) integriert sind, wobei jedes (101) der Photovoltaikmodule ein planares Photovoltaikelement (102) und ein starres Trägerelement (103) umfasst, wobei mehrere (601) der Photovoltaikmodule zur Integration in eine vertikale Wand (602) des Gebäudes (501) nebeneinander gekachelt und durch das starre Trägerelement (103) begrenzt sind und wobei das starre Trägerelement (103) eingerichtet ist, um das planare Photovoltaikelement (102) aufzunehmen, um so einen Winkel zwischen der Oberfläche des planaren Photovoltaikelements (102) und der Oberfläche der vertikalen Wand (602) zu definieren, wobei das Verfahren **dadurch gekennzeichnet ist, dass** es umfasst:
- Definieren mehrerer Fassadenparameter (502, 503, 504) für die vertikale Wand (602) des Gebäudes (501), wobei die Fassadenparameter (502, 503, 504) umfassen: Kardinalausrichtung (503) der vertikalen Wand, Anbringungshöhe (502), die auf der vertikalen Wand (602) verfügbar ist;
- Definieren mehrerer Anbringungsparameter (511, 512, 513, 514) der Photovoltaikmodule über eine vertikale und/oder horizontale Koordinate der vertikalen Wand und bezogen auf die Verteilung der Photovoltaikmodule über die Wand, wobei die Anbringungsparameter von physikalischen Charakteristiken der Photovoltaikmodule (101, 601) abhängen, die entlang der vertikalen und/oder horizontalen Koordinate anwendbar sind, die mit der vertikalen Wand (602) assoziiert ist;
- Definieren einer Prioritätsfunktion (520), die mit den Anbringungsparametern (511, 512, 512', 513, 514) assoziiert und variabel entlang der vertikalen und/oder horizontalen Koordinate ist, wobei die Prioritätsfunktion bereitstellt:
- ein Prioritätsübergewicht für einen Beleuchtungsparameter (511) im oberen Teil der Wand;
- ein erstes Prioritätsübergewicht für einen Sichtbarkeitsparameter (512) bei der durchschnittlichen Höhe eines Kopfes eines Benutzers (506);
- ein zweites Prioritätsübergewicht für einen Blendungskontrollparameter (512') bei der durchschnittlichen Höhe eines Kopfes eines Benutzers;
- ein Prioritätsübergewicht für einen Deckungsparameter im unteren Teil der Wand;
- eine Prioritätsmaximierung überall für einen Photovoltaikflächenparameter;
- gemäß den Fassadenparametern (502, 503, 504), den Anbringungsparametern (511, 512, 512', 513, 514) und der Prioritätsfunktion (520), Bestimmen der physikalischen Charakteristiken jedes der Photovoltaikmodule (101) entlang der vertikalen und/oder horizontalen Koordinate und ferner Berechnen von Werten für den Winkel jedes der Photovoltaikmodule (101) entlang der vertikalen und/oder horizontalen Koordinate um zu:
- Definieren einer Außengrenze (104) des starren Trägerelements (103), das einen planaren Umfang aufweist, um es zu erlauben, die Photovoltaikmodule auf einem Rahmen anzubringen, der mit anderen Photovoltaikmodulen (101) auf der vertikalen Wand assoziierbar ist;
- Definieren der Geometrie des starren Trägerelements (103), so dass die Ausrichtung der Photovoltaikelemente (102) bezogen auf die Außengrenze (104) und die vertikale Wand (602) den Winkel aufweist, der einen von mehreren diskreten Werten im Bereich von 0° bis 90° zwischen der Ebene der vertikalen Wand (602) und der Ebene des planaren Photovoltaikelements (102) annimmt;
- Anbringen der Photovoltaikmodule (601) an die vertikale Wand (602) gemäß den bestimmten typologischen Charakteristiken und der kalkulierten Werte des Winkels.

2. Verfahren zum Anbringen nach Anspruch 1, wobei die Anbringungsparameter umfassen: Den Beleuchtungsparameter (511), der abhängig von der Lichtintensität ist, die durch das starre Trägerelement (103) übertragbar ist, den Sichtbarkeitsparameter (512) und den Blendkontrollparameter (512'), der von der Transparenz des Trägerelements (103) abhängig ist, dem Photovoltaikflächenparameter (513), der abhängig von dem verwendbaren Bereich des planaren Photovoltaikelements (102) ist; den Deckungsparameter (514), der von einer Deckung des planaren Photovoltaikelements (102) abhängig ist.

3. Verfahren zum Anbringen nach Anspruch 2, wobei der Beleuchtungsparameter (511) ferner von einer Schattenbildung angrenzend zur vertikalen Wand (602) abhängig ist.

4. Verfahren zum Anbringen nach einem der Ansprüche 1 bis 3, wobei die mehreren Fassadenparameter (502, 503, 504) ferner umfassen: geografische Breite (504) der vertikalen Wand (602).

5. Verfahren zum Anbringen nach einem der Ansprüche 1 bis 4, wobei die physikalischen Charakteristiken umfassen: Material des starren Trägerelements (103); Oberflächenbeschaffenheit des starren Trägerelements (103); Typ des planaren Photovoltaikelements (102).

6. Verfahren zum Anbringen nach Anspruch 5, wobei das Material und die Oberflächenbeschaffenheit des starren Trägerelements (103) ein Element des Typs charakterisieren: transparent oder klar oder durchsichtig oder undurchsichtig.

7. Verfahren zum Anbringen nach Anspruch 5 oder 6, wobei das starre Trägerelement (103) aus Glas oder einem transparenten Kunststoffmaterial hergestellt ist.

8. Verfahren zum Anbringen nach Anspruch 1, wobei das starre Trägerelement (103) ein Paar von entsprechend gekrümmten Oberflächen aufweist, die so angepasst sind, dass sie Sonnenstrahlen, die auf das starre Trägerelement (103) treffen, in Richtung auf die Oberfläche des planaren Photovoltaikelements (102) leiten.

9. Verfahren zum Anbringen nach Anspruch 1, wobei die Geometrie des planaren Photovoltaikelements (102) gleich für jede Geometrie ist, die für das starre Trägerelement (103) jedes der Photovoltaikmodule (101, 101a, 101b, 101c, 101d, 101e) festgelegt wurde.

10. Verfahren zum Anbringen nach einem der Ansprüche 1 bis 9, wobei die physikalischen Charakteristiken jedes der Photovoltaikmodule (101, 101a, 101b, 101c, 101d, 101e) und die Werte des Winkels durch parametrische Optimierung unter Nebenbedingungen berechnet wird.

11. Verfahren zum Anbringen nach Anspruch 10, wobei die physikalischen Charakteristiken jedes der Photovoltaikmodule (101, 101a, 101b, 101c, 101d, 101e) und die Werte des Winkels für jedes der Photovoltaikmodule entlang der vertikalen und/oder horizontalen Koordinate variabel entlang der vertikalen und/horizontalen Koordinate sind.

12. Computerprogramm, vorzugsweise CAD-Programm, das, wenn es auf einem Computer läuft, eingerichtet ist, typologische Charakteristiken zu bestimmen und Werte eines Winkels in Übereinstimmung mit dem Verfahren zum Anbringen nach einem der Ansprüche 1 bis 11 zu berechnen.

## Revendications

1. Procédé d'application de modules photovoltaïques intégrés dans un bâtiment (501), chacun (101) desdits modules photovoltaïques comprenant un élément photovoltaïque plan (102) et un élément de support rigide (103), dans lequel une pluralité (601) desdits modules photovoltaïques sont carrelés les uns près des autres et contraints au moyen dudit élément de support rigide (103) pour intégration dans un mur vertical (602) dudit bâtiment (501), et dans lequel ledit élément de support rigide (103) est configuré pour loger ledit élément photovoltaïque plan (102) de façon à définir un angle entre la surface dudit élément photovoltaïque plan (102) et la surface dudit mur vertical (602), ledit procédé étant **caractérisé en ce qu'**il comprend :
- la définition d'une pluralité de paramètres de façade (502, 503, 504) pour ledit mur vertical (602) dudit bâtiment (501), lesdits paramètres de façade (502, 503, 504) comprenant : une orientation cardinale (503) dudit mur vertical (602), une hauteur d'application (502) disponible sur ledit mur vertical (602) ;
- la définition d'une pluralité de paramètres (511, 512, 513, 514) d'application des modules photovoltaïques sur une coordonnée verticale et/ou horizontale du mur vertical, et relatifs à la distribution desdits modules photovoltaïques sur ledit mur, lesdits paramètres d'application dépendant de caractéristiques physiques desdits modules photovoltaïques (101, 601) applicables le long de ladite coordonnée verticale et/ou horizontale associée audit mur vertical (602) ;
- la définition d'une fonction de priorité (520) associée auxdits paramètres d'application (511, 512, 512', 513, 514) et variable le long de ladite coordonnée verticale et/ou horizontale, ladite fonction de priorité fournissant :
- une prépondérance de priorité pour un paramètre d'illumination (511) dans la partie supérieure du mur ;
- une première prépondérance de priorité pour un paramètre de visibilité (512) à la hauteur moyenne de la tête d'un utilisateur (506) ;
- une seconde prépondérance de priorité pour un paramètre de contrôle d'éblouissement (512') à la hauteur moyenne de la tête de l'utilisateur ;
- une prépondérance de priorité pour un paramètre d'opacité dans la partie inférieure du mur ;
- une maximisation de priorité partout pour un paramètre d'aire photovoltaïque ;
- selon lesdits paramètres de façade (502, 503, 504), lesdits paramètres d'application (511, 512, 512', 513, 514) et ladite fonction de priorité (520), la détermination desdites caractéristiques physiques de chacun desdits modules photovoltaïques (101) le long de ladite coordonnée verticale et/ou horizontale, et en outre le calcul de valeurs pour ledit angle de chacun desdits modules photovoltaïques (101) le long de ladite coordonnée verticale et/ou horizontale, de façon à :
- définir une bordure externe (104) dudit élément de support rigide (103) ayant un périmètre plan, pour permettre d'appliquer le module photovoltaïque (101) sur un cadre associable à d'autres modules photovoltaïques (101) sur le mur vertical ;
- définir la géométrie dudit élément de support rigide (103) de sorte que l'orientation de l'élément photovoltaïque (102) par rapport à la bordure externe (104) et au mur vertical (602) ait ledit angle adoptant l'une d'une pluralité de valeurs discrètes allant de 0° à 90° entre le plan dudit mur vertical (602) et le plan dudit élément photovoltaïque plan (102) ;
- l'application desdits modules photovoltaïques (601) audit mur vertical (602) selon lesdites caractéristiques typologiques déterminées et lesdites valeurs calculées dudit angle.

2. Procédé d'application selon la revendication 1, dans lequel lesdits paramètres d'application comprennent : ledit paramètre d'illumination (511), dépendant de l'intensité de lumière transmissible à travers ledit élément de support rigide (103) ; ledit paramètre de visibilité (512) et ledit paramètre de contrôle d'éblouissement (512'), dépendant de la transparence dudit élément de support rigide (103) ; ledit paramètre d'aire photovoltaïque (513), dépendant de l'aire utilisable dudit élément photovoltaïque plan (102) ; ledit paramètre d'opacité (514), dépendant de l'opacité dudit élément photovoltaïque plan (102).

3. Procédé d'application selon la revendication 2, dans lequel ledit paramètre d'illumination (511) dépend en outre de l'ombrage adjacent audit mur vertical (602).

4. Procédé d'application selon l'une quelconque des revendications 1 à 3, dans lequel ladite pluralité de paramètres de façade (502, 503, 504) comprend en outre : une latitude géographique (504) dudit mur vertical (602).

5. Procédé d'application selon l'une quelconque des revendications 1 à 4, dans lequel lesdites caractéristiques physiques comprennent : le matériau dudit élément de support rigide (103) ; le fini de surface dudit élément de support rigide (103) ; le type dudit élément photovoltaïque plan (102).

6. Procédé d'application selon la revendication 5, dans lequel ledit matériau et ledit fini de surface dudit élément de support rigide (103) caractérisent un élément du type : transparent, ou clair, ou translucide, ou opaque.

7. Procédé d'application selon la revendication 5 ou 6, dans lequel ledit élément de support rigide (103) est constitué de verre ou d'un matériau plastique transparent.

8. Procédé d'application selon la revendication 1, dans lequel ledit élément de support rigide (103) comprend une paire de surfaces incurvées respectives, adaptées pour diriger des faisceaux solaires incidents sur ledit élément de support rigide (103) vers ladite surface dudit élément photovoltaïque plan (102).

9. Procédé d'application selon la revendication 1, dans lequel la géométrie dudit élément photovoltaïque plan (102) est la même pour toute géométrie établie pour ledit élément de support rigide (103) dans chacun desdits modules photovoltaïques (101, 101a, 101b, 101c, 101d, 101e).

10. Procédé d'application selon l'une quelconque des revendications 1 à 9, dans lequel lesdites caractéristiques physiques de chacun desdits modules photovoltaïques (101, 101a, 101b, 101c, 101d, 101e) et lesdites valeurs dudit angle sont calculées par une optimisation paramétrique sous contraintes.

11. Procédé d'application selon la revendication 10, dans lequel lesdites caractéristiques physiques de chacun desdits modules photovoltaïques (101, 101a, 101b, 101c, 101d, 101e) et lesdites valeurs dudit angle de chacun desdits modules photovoltaïques le long de ladite coordonnée verticale et/ou horizontale sont variables le long de ladite coordonnée verticale et/ou horizontale.

12. Programme d'ordinateur, de préférence programme de CAO, qui, lorsqu'il est exécuté sur un ordinateur, est configuré pour déterminer des caractéristiques typologiques et pour calculer des valeurs d'un angle en conformité avec le procédé d'application selon l'une quelconque des revendications 1 à 11.
